# EUROPEAN PATENT SPECIFICATION

(11) **EP 0 628 901 B1**
(45) Date of publication and mention of the grant of the patent: **08.09.1999**
(21) Application number: 94108971.6
(22) Date of filing: 10.06.1994
(51) Int. Cl.: G05F 1/67, H02J 5/00

(54) **Power control apparatus and method and power generating system using them**
Leistungsregelungsverfahren und -vorrichtung und Stromversorgungssystem damit
Procédé et dispositif de commande de puissance et système générateur de puissance utilisant ces derniers

(30) Priority: 11.06.1993 JP 14068293
(43) Date of publication of application: 14.12.1994
(73) Proprietor: CANON KABUSHIKI KAISHA, Tokyo (JP)
(72) Inventor: Takehara, Nobuyoshi, c/o Canon Kabushiki Kaisha, Tokyo 146 (JP); Kurokami, Seiji, c/o Canon Kabushiki Kaisha, Tokyo 146 (JP)
(74) Representative: Tiedtke, Harro, Dipl.-Ing.

(56) References cited:
- EP-A- 0 140 149
- EP-A- 0 326 489
- WO-A-87/00312
- JP-A- 62 085 312
- US-A- 4 899 269
- US-A- 4 916 382
- IEEE TRANSACTIONS ON AEROSPACE AND ELECTRONIC SYSTEMS, vol. 29,no. 3, July 1993 NEW YORK US, pages 935-945, XP 000398836 KASEMSAN SIRI ET AL 'Maximum Power Tracking in Parallel Connected Converters.'
- PROCEEDINGS OF THE INTERNATIONAL PHOTOVOLTAIC SCIENCE AND ENGINEERI CONFERENCE, KYOTO, NOV. 26 - 30, 1990, vol. CONF. 5, JAPAN SOCIETY OF APPLIED PHYSICS, pages 661-664, XP 000215111 GWONJONG YU ET AL 'APPLICATION OF INSTANTEOUS SINUSOIDAL CURRENT TRACKING CONTROL INVERTER TO PHOTOVOLTAIC SYSTEM'

## Description

The invention relates to a power control apparatus and method for converting electric power from a power source into a desired power system and to a power generation system using such apparatus and method. The invention also relates to a power control apparatus and method for efficiently extracting electric power from a power source and to a power generation system using such apparatus and method.

Since a consciousness to the recent earth environment is rising, a power generation system using a wind power generation, a solar battery, or the like as a safety and clean energy source is largely expected. However, an output of the solar battery or the like extremely fluctuates in dependence on parameters such as insolation amount, atmospheric temperature, operation point voltage, and the like. Therefore, it is demanded to adjust a load when it is seen from the solar battery and to always take out the maximum electric power. For this purpose, various kinds of apparatuses and methods have conventionally been proposed. For example, in case of the solar battery, a method whereby meteorological conditions which momently change are grasped and the operation voltage is determined by using a monitor comprising an auxiliary solar battery or a sensor which is provided separately from a solar battery array and is used to detect a light amount or a temperature, namely, what is called an indirect method has been disclosed in JP-B-61-2206 or the like. On the other hand, a method whereby such an auxiliary sensor is not used but an operation point voltage or current of a solar battery array is finely fluctuated and an electric power fluctuation at that time is checked and an operation voltage is determined, namely, what is called a direct method has also been disclosed in JP-B-63-57807 or the like. Hitherto, a power converter or the like has been controlled by extracting the maximum output from the solar battery by using the method as mentioned above.

The above methods, however, have the following problems.

According to the indirect method, it is necessary to use the monitor which is used to detect an insolation amount or the like and comprises the sensor or solar battery that is provided separately from the solar battery array, and it is also necessary to perfectly grasp the relations between the meteorological conditions which were measured by the monitor or the parameters indicative of the meteorological conditions and the operation point voltage and power of the solar battery array to be controlled. In order to accurately grasp such relations, it is necessary to precisely measure them for a long period of time, so that it is very troublesome. In addition, an area of solar battery array is generally equal to or larger than a few square meters, while the monitor is so smaller than the solar battery array that there is a case of occurrence of a measurement error or the like for the whole solar battery array. For example, in case of detecting an insolation amount, if the monitor portion is covered by a shadow due to some circumstances, in spite of the fact that a solar light is irradiated to the whole solar battery array, a judgment of "dark" is made, so that the correct control cannot be performed.

According to the direct method, since the auxiliary monitor provided separately from the solar battery array is not used, the maximum power point of the solar battery array can be always tracked. According to such a method, however, in order to raise the tracking precision, it is necessary to finely check the optimum operation voltage in a wide range. Generally, the operation point voltage to obtain the maximum power of the solar battery fluctuates by at most about 10% in dependence on the meteorological conditions. For example, in case of the solar battery array whose output voltage is equal to about 200V, the optimum operation voltage exists in a range of about 180 to 220 V. Therefore, in order to obtain the optimum operation voltage, the above range must be finely examined. It is, however, difficult to always momentarily scan the whole range. In JP-B-63-57807 or JP-A-62-85312, an inspected range is narrowed by using a voltage differentiated value of an electric power or by introducing a mark indicative of the change direction of an operation point voltage. According to such a method, when the meteorological conditions fluctuate, the fluctuation of the operation point is gradually traced, so that a fluctuation width must be properly determined in consideration of the relation between the tracking precision and the transient response speed. Actually, since the optimum fluctuation value differs in dependence on the installing district, the kind of solar battery, or the like, it is difficult to accurately obtain the optimum fluctuation value. Since the above method uses the differentiated value or the like although it is very sharp, there is a problem such that it is largely influenced by an error of the measuring system or a sudden insolation change and an excessive response easily occurs. On the other hand, according to JP-A-62-42213, a fluctuation is given to an output of the solar battery, the voltage and current are sampled, and the point at which the maximum electric power is obtained is directly found out. According to such a method, although a stability is high as compared with the above method, in order to raise the tracking precision, it is necessary to finely examine a wide range as mentioned above and the sampling number cannot help being increased. Both of the tracking precision and the response speed cannot be simultaneously satisfied.

Document JP-A-62 085 312 discloses a control method for obtaining the maximum power stably and with a high accuracy by changing a variation width of a voltage reference which is given to a power converter. This variation width of the voltage reference is changed in accordance with whether a variation quantity of an output power of a battery power source, which has been generated by a variation of this voltage reference, is large or small.

Document US-A-4 899 269 discloses a system for regulating the operating point of a direct current power supply comprising a current generator system connected to a pulse width modulation converter. The system includes a circuit for sampling and measuring the voltage and the current supplied by the current generator. A threshold detector circuit responding to stalling of the converter supplies a logic signal representing the stalled or not-stalled state of the converter relative to threshold values. A regulation loop includes a switching device for inverting the sign of the error signal so that the operating point can be moved towards the maximum power point on the output current-voltage characteristic of the current generator.

It is an object of the invention to provide novel power control apparatus and method which can solve the above problems which are caused by the conventional power control of a battery power source and also to provide a power generation system using such apparatus and method.

According to the invention, the above problems are solved by a power control apparatus according to claim 1.

The above problems are also solved by a power control method according to claim 6.

Further aspects of the invention are set out in the dependent claims.

According to the control apparatus and method of the present invention, the relation between the output voltage of the battery power source such as a solar battery or the like (hereinafter, also referred to as a solar battery array) and the output power is approximated by the function with a polar, thereby obtaining the voltage at which the power is equal to an extreme value. Therefore, the voltage at which the maximum power is derived can be correctly, quickly, and accurately set by a narrow inspected range or the small sampling number. The maximum power can be extracted from the solar battery array or the like.
Fig. 1 shows an example of a block circuit diagram of a solar light power generation system using a control apparatus of the present invention;
Fig. 2 shows another example of a solar light power generation system using the control apparatus of the invention;
Fig. 3 is a graph showing an example of the inspection of the optimum operation point in the solar light power generation system using the control apparatus of the invention;
Fig. 4 shows another example of the inspection of the optimum operation point of the solar light power generation system using the control apparatus of the invention; and
Fig. 5 shows an example of a flowchart showing the operation of the invention.

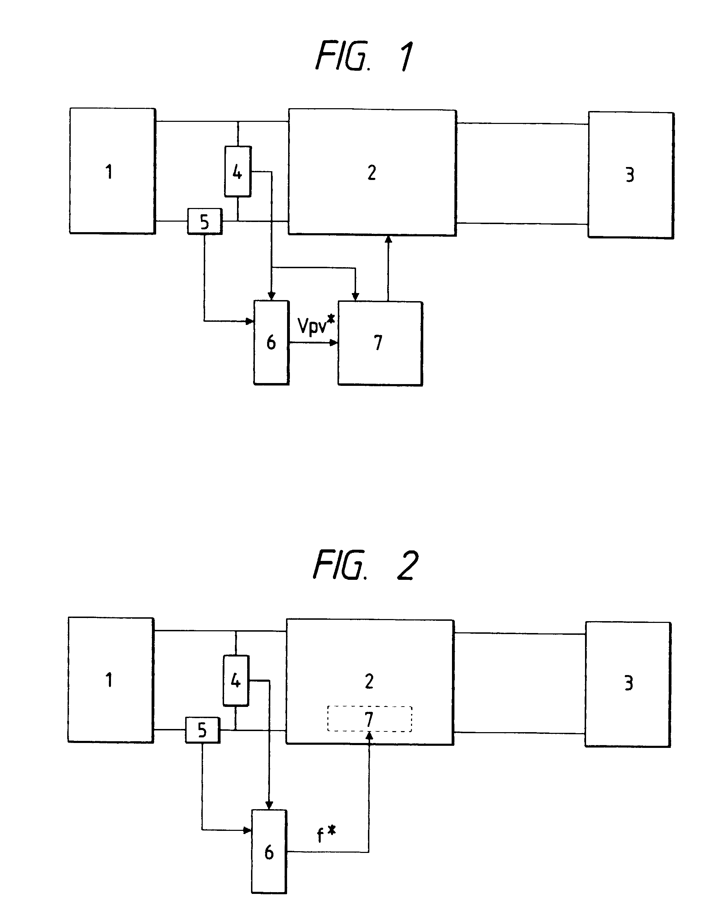

Fig. 1 shows an example of a power generation system using a power control method of the invention. A DC output of a solar battery 1 is input to a power converter 2 and supplied to a load 3.

As a solar battery 1, it is possible to use a battery in which a crystalline silicon, non-monocrystalline silicon (amorphous silicon system or the like), compound semiconductor, or the like is used as a photoelectric converting device. Generally, a plurality of solar batteries are combined in series and in parallel so as to form a solar battery array, thereby obtaining desired voltage and current.

As a power converter 2, there is a DC/DC converter using a self-arc-extinguishing type switching device such as power transistor, power FET, IGBT, or the like, a self-exciting type DC/AC inverter, or the like. A power flow, input/output voltages, an output frequency, and the like of the power converter can be controlled by ON/OFF duty ratios (so called conduction ratios) and frequencies of all gate pulses.

As a load 3, there are various kinds of loads such as electrothermal load, motor load, and the like. In case of an alternating current, a commercially available AC system can be also used. When a commercially available AC system is used as a load, such a system is called a "system interconnection solar light power generation system". Since the power system is used as a load, there is no limitation in an electric power which can be applied. The control system of the present invention which applies the maximum limit electric power from the solar battery or the like is particularly preferable. Although a secondary battery can be also used as a DC load, in such a case, it is desirable to set a capacitance of the secondary battery into an enough large value and to manage a charging state of the battery. In the case where a direct current is used as a load, a DC/DC converter is used as a power converter 2.

An output voltage and an output current of the solar battery 1 are detected by voltage detecting means 4 and current detecting means 5, respectively, and their detection signals are input to output voltage setting means 6 of the solar battery.

The voltage detecting means 4 divides the solar battery output voltage by a resistor and A/D converts into the digital value and sends to the output voltage setting means 6 and control means 7. In this case, in order to avoid the mixture of noises or the like, it is desirable to insulate an output circuit of the solar battery and a transmission circuit of the detection signal by using a photocoupler or the like which can perfectly perform the insulation between the input and the output. It is proper that the current detecting means 5 converts the current into the voltage by a Hall element, a standard resistor, or the like and supplies a detection signal as a digital value to the voltage setting means 6 in a manner similar to the voltage detecting means 4. As A/D converters which are used in those detecting means, it is preferable to use A/D converters having a high processing speed and a high precision. Specifically speaking, it is desirable to use an A/D converter having a resolution of 10 bits or more and a sampling frequency of 50 Khz or higher. Such an A/D converter can construct a control system having an error of 0.1% or less and a response speed of one second or less.

The output voltage setting means 6 executes an arithmetic operation on the basis of the detection signal and determines an output voltage set value and controls a conduction ratio or the like of a gate circuit of the power converter in a manner such that the solar battery output voltage is equal to the set value. The output voltage setting means 6 is realized as a microcomputer for control and can have a CPU, an RAM, an ROM, input/output ports, a numerical value operator, and the like.

The control means 7 of the power converter is what is called a gate driving circuit and generates a gate pulse by an instantaneous value current comparing method, a sine wave/triangular wave comparing method, or the like. Due to this, the control means 7 controls the conduction ratio of the power converter 2 so that the output voltage of the solar battery coincides with the output of the output voltage setting means 6. Although the control means 7 can be constructed by either an analog circuit or a digital circuit, in recent years, most of the control means are constructed by digital circuits. The control means 7 has a CPU or a DSP (Digital Signal Processor) as a high speed CPU.

The control means 7 in the case where it is constructed by a digital circuit has a construction similar to the foregoing output voltage setting means 6 and both of them can be also commonly used.

A method of inspecting the operation voltage to obtain the maximum power in the control apparatus and method will now be described.

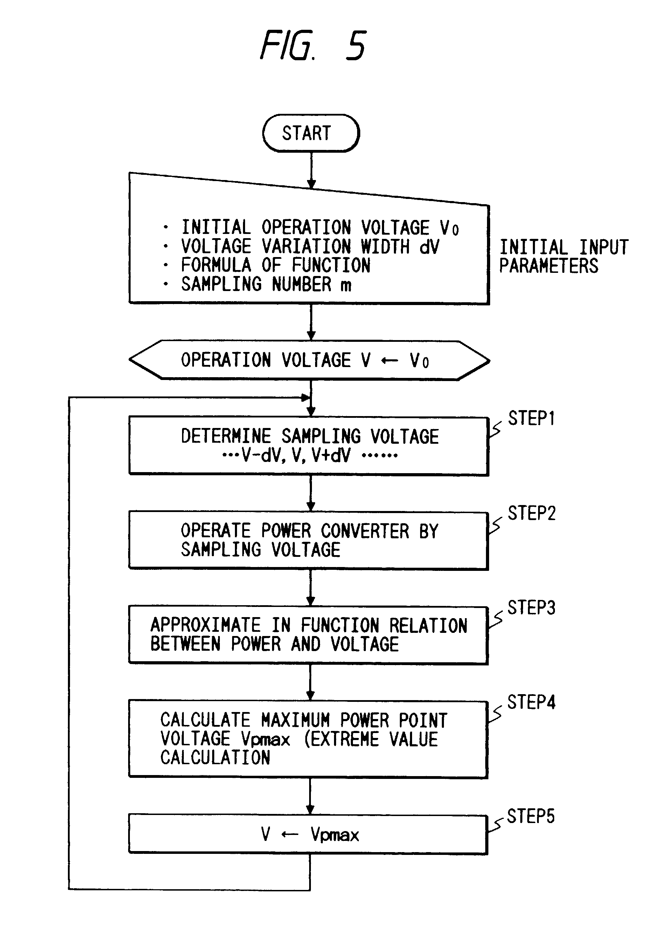

Fig. 5 shows an operation flowchart of the present invention. When embodying the invention, first, it is preferable to predetermine an initial operation voltage, a voltage fluctuation width upon inspection, a formula of function which is used for approximation, and the sampling numbers of the voltage and power and to store them into an ROM. The initial operation voltage is determined by the construction of the solar battery array. For example, when ten solar battery modules UPM880 made by USSC Co., Ltd. are connected in series and used, it will be understood that it is proper to set the initial operation voltage to about 160V from the rated voltage shown in a brochure. Even in any solar battery, since the rated voltage is displayed, it is sufficient to decide the initial operation voltage in accordance with the rated voltage. The voltage fluctuation width is set to a value of (10 and a few) % or less of the initial operation voltage. In the invention, it is desirable to set the voltage fluctuation width to 2% or more. When the voltage fluctuation width is too small, a precision of the function approximation deteriorates due to an error of a measuring instrument and there is a case of occurrence of an error in the optimum operation voltage. In the invention, even when a large fluctuation width is previously given, a tracking precision higher than that by the conventional method can be held.

The formula of function that is used in the present invention must be a function with a polar having an extreme value. As such a function, a power function of second or higher degree, a trigonometric function, or the like can be mentioned. The sampling number must be set to a value at which the necessary parameters can be determined. For example, in case of the quadratic function, three parameters are necessary to describe the function and at least three sampling points are necessary. The quadratic function is fairly suitable to realize the invention because there is only one extreme value and a solution can be also easily obtained.

The trigonometric function or exponential function also has a function such that a curve can be described by a smaller number of parameters. The high order power function has a feature such that a fitting performance of a curve is high.

According to circumstances, after approximate values were first obtained by the quadratic function, the sampling operation can be also executed by another sampling method such as a tracking method mentioned above from positions near the approximate values.

The actual operations can be executed as follows.

### (First step)

(m) voltages to be sampled are formed at positions near a present operation voltage V and are stored into the RAM of the voltage setting means 6.

### (Second step)

The (m) voltages formed in the first step are supplied to the control means 7, thereby actually making the power converter operative. At the same time, voltage and current detection signals are input from the input/output ports. The voltage and current and the electric power which was calculated by the numerical value operator are stored into the RAM.

### (Third step)

On the basis of the voltage and power obtained in the second step, the coefficients of the formula of function which has previously been stored in the ROM are obtained. (Execution of the function approximation)

### (Fourth step)

The voltage at which the extreme power value is derived is obtained by using the formula of function which was decided in the third step. Such a voltage is the operation point voltage to obtain the maximum output voltage.

### (Fifth step)

The optimum operation voltage obtained as mentioned above is supplied to the control means 7 of the power converter through the input/output port. The processing routine is returned to the first step.

According to the invention, the power converter is controlled while continuously inspecting the optimum operation point voltage as mentioned above.

Specific examples of the present invention will now be described hereinbelow in more detail.

### [Embodiment 1]

Ten amorphous solar battery modules (made by USSC Co., Ltd.; a trade name UPM880) are serially connected and used as a solar battery. A full bridge inverter by an IGBT (Insulated Gate Bipolar Transistor) as a self-arc-extinguishing type switch device is constructed as a power converter 2. The IGBT is a switching device of a high withstanding voltage and a high speed and is preferably used in inverters up to the class in a range from a few 100 W to a few 10 kW.

An AC output of the power converter is set to 100V by using a transformer and is connected to the commercially available AC system as a load.

The voltage detecting means is constructed in a manner such that the output voltage of the solar battery array is divided into 20 : 1 by a resistor and is converted into the digital value by using an A/D converter of a full scale of 10V and a resolution of 12 bits and the digital value is sent to the voltage setting means 6 and control means 7 by using a parallel bus of eight bits. As current detecting means, a standard resistor of 10 milliohms is serially inserted into the solar battery array circuit and the voltage across the resultant serial circuit is amplified by 500 times by an operational amplifier. After that, the amplified voltage is converted into the digital value of 12 bits by using an A/D converter similar to that in the voltage detecting means. After that, the digital value is sent to the voltage setting means 6 by a parallel bus of eight bits.

As voltage setting means 6, a one-board microcomputer (8086 made by Intel Co., Ltd.) is used as a CPU. General parallel input/output ports, a memory, a numerical value operating coprocessor to execute a real number arithmetic operation, a serial interface, and the like are installed on the board. Such a CPU has a construction suitable for embodying the invention.

A PWM (pulse width modulation) of the well-known triangular wave comparing method is used as control means 7. A carrier frequency is set to 2 kHz. The control means 7 of the invention compares a command voltage from the output voltage setting means 6 and the output voltage of the solar battery array and changes the duty [ON time/(ON time + OFF time)] of the gate pulse so as to make the output voltage of the solar battery array coincide with the instructed voltage.

The inspecting operation of the operation point of the embodiment will now be described.

The solar battery array 1 is installed in the outdoor. The output of the output voltage setting means 6 is set to 150V. In this instance, the array output of the solar battery is equal to 150V, the current is equal to 0.87A, and the electric power is equal to 131W. The insolation amount is equal to about 75 mW/cm². It is possible to arbitrarily select those initial values in accordance with the input possible voltage range of the power converter, the array construction of the solar battery, and the kind of solar battery.

The output of the output voltage setting means 6 is subsequently changed at four points every 5V in a range from 145 to 160 V. The voltages, currents, and powers at those points are stored into a memory of the one-board microcomputer. The values in this case are shown in Table 1.

**Table 1**

| | Voltage (V) | Current (A) | Power (W) |
|---|---|---|---|
| 1 | 145 | 0.92 | 133 |
| 2 | 150 | 0.87 | 131 |
| 3 | 155 | 0.82 | 127 |
| 4 | 160 | 0.76 | 122 |

An electric power P is shown as follows as a cubic expression of the voltage V. It is necessary to previously define the relational equations among the sampling number, power, and voltage mentioned above.${\text{P = aV}}^{\text{3}} {\text{+ bV}}^{\text{2}} \text{+ cV + d}$

By substituting the sets of voltage and power of the above Table 1 into the above equation (1), the following simultaneous equations with four unknowns.$\text{133 = 3048625a + 21025b + 145c + d}$$\text{131 = 3375000a + 22500b + 150c + d}$$\text{127 = 3723875a + 24025b + 155c + d}$$\text{122 = 4096000a + 25600b + 160c + d}$

From the above equations, coefficients a, b, c, and d are as follows.${\text{a = 1.33684 × 10}}^{\text{-3}}$$\text{b = -0.641615}$$\text{c = 101.614}$$\text{d = -5186.67}$

The electric power V at which the electric power P becomes maximum is subsequently obtained by the equation (1). Since such a power V is equal to the voltage V of dp/dv = 0, the following equation is derived.$\text{Vmp} \text{=(} \text{-b} \text{±} \sqrt{{\text{b}}^{\text{2}} \text{-3} \text{ac}} \text{)/3} \text{a}$

By substituting numerical values into the equation (2), the voltage with an extreme value is obtained.$\text{Vmp = 143or - 176V}$

Since the coefficient (a) of degree three is larger than 0 (a > 0), the voltage at which the extreme value is derived is set to 143V.

The output voltage set value is determined as mentioned above and is sent to the control means 6.

In the next inspection, the voltage is changed at four points every 5V around the above voltage set value as a center and the inspection is again executed.

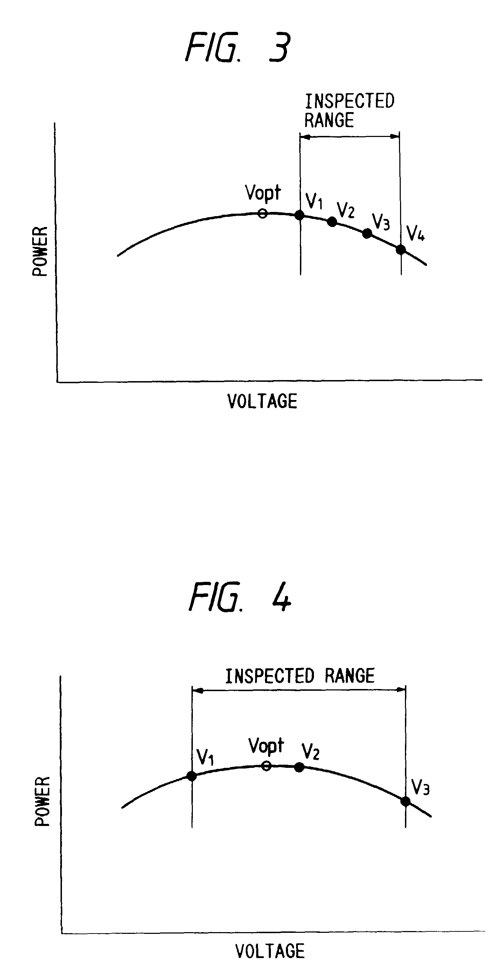

The optimum operation point voltage which was measured by an I-V tracer just before the operation is confirmed in the embodiment is equal to about 142V. It will be understood that according to the invention, the optimum operation point was found out at a high precision. According to the invention, on the other hand, even when the optimum operation point voltages exist out of the inspected range, they can be immediately obtained. Fig. 3 shows such a state.

Further, even when the optimum operation point voltages are discretely inspected every 5V, the optimum operation voltage values can be also obtained in a manner similar to the case where they are continuously swept. In the embodiment, although the relational equation between the voltage and the power has been described by a cubic equation, a more complicated equation can be also used. In such a case, however, it is necessary to properly set a method of obtaining the voltage at which the extreme power value is derived, the number of parameters of the relational equation, a method of deciding such a number, and the like. The above calculations are performed by the microcomputer of the output voltage setting means 6 and the numerical value operating processor. It is obviously necessary that those operation sequences and the relational equation between the voltage and the power are previously stored as programs in the output voltage setting means 6.

In the embodiment, the tracking precision when the apparatus was continuously operated is equal to 99.96%. When the inspection is performed in the same voltage fluctuation width as that in the embodiment by using the method of JP-A-62-85312 (already described in the introductory part of the description) in which the tracking precision is highest among the conventional methods, the tracking precision is equal to 99.90%.

The tracking precision is a relative value of the output voltage amount in each method when the output voltage amount in the case where the apparatus was continuously operated by the optimum operation point voltage is set to 100.

### [Embodiment 2]

Five amorphous solar batteries (made by USSC Co., Ltd.; trade name UPM880) are serially connected and used as a solar battery. A full bridge inverter by an MOSFET is constructed as a power converter 2. The MOSFET is a high speed switching device and is used in an inverter to convert a direct current of a relatively low voltage into an alternating current. The AC output of the power converter 2 is transformed into 100V by using a transformer and is connected to a commercially available AC system as a load.

The voltage detecting means divides the output voltage of the array into 10 : 1 by a resistor and is converted into the digital value by using an A/D converter of a full scale of 10V and a resolution of 12 bits. The digital value is sent to the voltage setting means 6 and control means 7 by a parallel bus of eight bits. As current detecting means, a standard resistor of 10 milliohms is serially inserted into the array circuit and the voltage across the resultant serial circuit is amplified by 500 times by an operational amplifier. After that, the amplified signal is converted into the digital value of 12 bits by using the same kind of A/D converter as the voltage detecting means. After that, the digital value is sent to the voltage setting means 6 by a parallel bus of eight bits.

As voltage setting means 6, a one-board microcomputer using 68000 made by Motorola Inc. as a CPU is used. General parallel input/output ports, a memory, a numerical value operating coprocessor, a serial interface, and the like are installed on the board. Such a CPU is suitable to embody the present invention.

A PWM (pulse width modulation) of the well-known instantaneous value current comparing system is used as control means 7. A carrier frequency is set to about 8 kHz. The control means 7 of the invention compares the instructed voltage from the voltage setting means 6 and the output voltage from the array and changes a duty of a gate pulse so as to make the array output voltage coincide with the instructed voltage.

The inspecting operation of the operation point in the embodiment will now be described.

The solar battery array 1 is installed in the outdoor. The output of the output voltage setting means 6 is set to 70V. In the array output of the solar battery in this instant, the voltage is equal to 70V, the current is equal to 0.95A, and the electric power is equal to 66.5W. The insolation amount at this time is equal to about 70 mW/cm².

The output of the output voltage setting means 6 is changed at three points every 10V in a range from 50 to 70 V. The voltages, currents, and powers at those points are stored into a memory of the one-board microcomputer. Table 2 shows the values in this instance.

**Table 2**

| | Voltage (V) | Current (A) | Power (W) |
|---|---|---|---|
| 1 | 60 | 1.04 | 62.4 |
| 2 | 70 | 0.95 | 66.5 |
| 3 | 80 | 0.76 | 60.8 |

The power P is expressed as follows as a quadratic equation of the voltage V. It is necessary to previously define the relational equations among the sampling number, the power, and the voltage.${\text{P = aV}}^{\text{2}} \text{+ bV + c}$

By subsequently substituting the sets of voltage and power in the above table 2 into the equation (3), the following simultaneous equations with three unknowns are obtained.$\text{62.4 = 3600a + 60b + c}$$\text{66.5 = 4900a + 70b + c}$$\text{60.8 = 6400a + 80b + c}$

The coefficients a, b, and c are as follows by the above equations.$\text{a = -0.049}$$\text{b = 6.78}$$\text{c = -168}$

The voltage V at which the power P becomes maximum is obtained by the equation (3). Since such a voltage is equal to the voltage V at which dp/dv = 0, the following equation is derived.$\text{Vmp = -b/2a}$

By substituting the numerical value into the equation (4), the voltage at which the extreme value is derived is obtained.$\text{Vmp = 69V}$

As mentioned above, the output voltage set value is determined and sent to the control means 6.

In the next inspection, the voltage is changed at three points every 10V around the output voltage set value as a center and the inspection is again executed.

As a result of the measurement of the output characteristics of the solar battery array before the operation is confirmed in the embodiment, the optimum operation point voltage is equal to about 68V. According to the method of the invention, in spite of the fact that the inspection is discretely performed in a very wide range, the optimum operation point can be accurately found out in a manner similar to the case where the voltage was continuously swept. Fig. 4 shows such a state.

In the embodiment, since the relational equation between the voltage and the power has been described by the quadratic equation, the coefficients of the relational equation and the extreme values can be fairly easily calculated. A load of the voltage output setting means 6 to the program can be reduced. Therefore, even with respect to a point of the operating speed, the embodiment is more advantageous as compared with the embodiment 1.

When the apparatus is continuously operated in the embodiment, the tracking precision is equal to 99.0%. When the inspection is performed in the same voltage fluctuation width as that in the embodiment by the method of JP-A-62-85312 (already described in the introductory part of the present application), the tracking precision is equal to 96.0%. As mentioned above, according to the invention, even in the case where the voltage fluctuation width for inspection is large, the optimum operation point can be traced at a high precision.

### [Embodiment 3]

Twenty amorphous solar battery modules (made by USSC Co., Ltd.; trade name UPM880) are serially connected and used as a solar battery. An inverter for a motor by a power transistor is used as a power converter 2. The power converter has therein a gate control circuit. By inputting an analog voltage, an AC output voltage and a frequency can be changed. An AC output of the power converter is connected to a pump for a well (3-phase 200V, 500 VA) as a load.

The voltage detecting means divides the output voltage of the array into 40 : 1 by a resistor. The divided voltage is converted into the digital value by using an A/D converter of a full scale of 10V and a resolution of 12 bits. The digital value is sent to the voltage setting means 6 by a parallel bus of eight bits. As current detecting means, a standard resistor of 10 milliohms is serially inserted into the array circuit. The voltage across the resultant serial circuit by 500 times by an operational amplifier. After that, the amplified signal is converted into the digital value of 12 bits by using the same kind of A/D converter as that of the voltage detecting means. After that, the digital value is sent to the voltage setting means 6 by a parallel bus of eight bits.

As voltage setting means 6, a one-board microcomputer using 68000 made by Motorola Inc. is used as a CPU. General parallel input/output ports, a memory, a numerical value operating coprocessor, a serial interface, a D/A converter, and the like are installed on the board. Such a CPU is suitable to embody the present invention.

In the embodiment, since a gate control circuit is built in the inverter, the output voltage setting means 6 has a function of the input voltage control. That is, an output frequency of the inverter for a motor is adjusted so that the input voltage is equal to the set value. The instructed frequency is sent as an analog voltage to the inverter for motor by using the D/A converter.

The inspecting operation of the operation point in the embodiment will now be described.

The solar battery array is installed in the outdoor and the output of the output voltage setting means 6 is set to 280V. In the array output of the solar battery at this time, the voltage is equal to 280V, the current is equal to 1.15A, and the power is equal to 322W. The insolation amount is equal to 94 mW/cm².

Subsequently, the output of the output voltage setting means 6 is changed at three points every 20V in a range from 260 to 300 V. The voltages, currents, and powers at those points are stored into the memory of the one-board microcomputer. Table 3 shows the values at those times.

**Table 3**

| | Voltage (V) | Current (A) | Power (W) |
|---|---|---|---|
| 1 | 260 | 1.04 | 270 |
| 2 | 280 | 1.15 | 322 |
| 3 | 300 | 0.76 | 228 |

The power P is expressed as follows as a quadratic function of the voltage V in a manner similar to the embodiment 2.${\text{P = aV}}^{\text{2}} \text{+ bV + c}$

Subsequently, by substituting the sets of the voltages and powers in the Table 3 into the above equation (5), the following simultaneous equations with three unknowns are obtained.$\text{270 = 67600a + 260b + c}$$\text{322 = 78400a + 280b + c}$$\text{288 = 90000a + 300b + c}$

The coefficients a, b, and c are obtained as follows by the above equations.$\text{a = -0.1825}$$\text{b = 101.15}$$\text{c = -13692}$

The voltage V at which the power P becomes maximum is obtained from the equation (3). Since such a voltage is the voltage V in which dp/dv = 0, the following equation is derived.$\text{Vmp = -b/2a}$

By substituting the numerical values into the equation (4), the voltage at which an extreme value is derived is obtained.$\text{Vmp = 277V}$

The output voltage set value is determined as mentioned above and is sent to the control means 7.

In the next inspection, the voltage is changed at three points every 20V around the above output voltage set value as a center and the inspection is again executed.

In the measurement of the output characteristics of the array in the embodiment, the optimum operation point voltage is equal to about 276V. According to the method of the invention, in spite of the fact that the inspection has been discretely performed in a very wide range, the optimum operation point can be found out in a manner similar to the case where the voltages were precisely and continuously swept.

As mentioned above, even when the present method is applied to an independent type power source, no problem occurs. The same shall also apply to the case where a DC/DC converter is used.

As described above, according to the invention, there are the following effects.
(1) Even when the optimum operation point is located out of the inspected region, the optimum operation point can be found out at a high precision by one inspection.
(2) Even when the inspection is discretely performed by a predetermined step width, the optimum operation point can be found out in a manner similar to the case of continuously sweeping.
(3) By setting the inspection step width to a large value, the optimum operation point can be accurately found out in a wide range by a small number of sampling points.
(4) Particularly, by using a quadratic function as a relational equation between the electric power and the voltage, the optimum operation point can be calculated at an extremely high speed.

According to the present invention having such excellent features, the industrial use value is very high. Particularly, it is very useful in a power generation system which is interconnected with the commercially available system.

Power control apparatus and method for fetching the maximum electric power from a battery power source and a system using such apparatus and method are provided. For this purpose, the power control method comprises the steps of fluctuating an output voltage of the battery power source and obtaining (m) power values from at least (m) voltage signals from voltage detecting means and at least (m) current signals from current detecting means which were sampled at desired intervals, calculating a formula of function with a polar to approximate the relations between the (m) voltage values and (m) power values, obtaining a voltage at which a power is set to an extreme value from the formula of function with a polar, and setting the power at such a voltage into an output power set value and controlling the output power of the battery power source.

## Claims

1. A power control apparatus comprising:
power converting means (2) for converting electric power from a battery power source (1) and supplying the converted power to a load (3);
output value detecting means (4, 5) for detecting output values of said battery power source (1);
output value setting means (6) for setting a desired output value of said battery power source; and
control means (7) for controlling said power converting means (2) so that an output value of the battery power source (1) is equal to the said desired output value;
wherein said output value setting means (6) sets the said desired output value on the basis of a function approximated from a plurality of samples of said output values detected by said output value detecting means (4, 5); and
wherein said function is either a power function of second or higher degree, a trigonometric function, or an exponential function, and said function is used by the output value setting means (6) to obtain the said desired output value at which maximum power is delivered by the battery power source (1).

2. An apparatus according to claim 1, wherein said output value detecting means comprises output voltage detecting means and output current detecting means.

3. An apparatus according to claim 2, wherein said output value setting means obtains m power values from m voltage values from said output voltage detecting means and m current values from said output current detecting means, calculates said function to approximate a power value and a voltage value from said m voltage values and said m power values, and sets an output voltage value at which the power becomes maximum from said function.

4. An apparatus according to claim 3, wherein said function to approximate is a quadratic function.

5. An apparatus according to claim 4, wherein sampling numbers m of said voltage and current are equal to m = 3.

6. A power control method comprising the steps of:
fluctuating the output voltage of a battery power source (1) and obtaining m power values, indicative of the power delivered by the battery power source (1), on the basis of m corresponding sample voltage values and m corresponding sample current values obtained respectively from voltage detecting means (4) and current detecting means (5), wherein sampling is carried out at desired intervals;
obtaining a function which approximately relates the m voltage values and the m corresponding power values, wherein said function is either a power function of second or higher degree, a trigonometric function, or an exponential function,
using said function to obtain the desired output voltage of said battery power source (1) at which it delivers maximum power,
controlling the output of said battery power source (1) so that its output voltage is equal to the said desired output voltage.

7. A method according to claim 6, wherein said function to approximate is a quadratic function.

8. A method according to claim 6, wherein sampling numbers m of said voltage and current are equal to m = 3.

9. A method according to claim 6, wherein said sampling interval is a predetermined interval.

10. A power generation system including a power control apparatus according to claim 1, wherein the battery power source (1) is a solar battery.

11. A power generation system including a power control apparatus according to claim 1, wherein the battery power source (1) is a non-monocrystalline semi-conductor.

12. A power generation system including a power control apparatus according to claim 1, wherein the load (3) is a commercially available AC system.

## Patentansprüche

1. Leistungssteuervorrichtung, mit
einer Energie-Umwandlungseinrichtung (2) zum Umwandeln elektrischer Energie aus einer Batterie-Energiequelle (1) und zum Zuführen der umgewandelten Energie zu einer Last (3),
einer Ausgangssignalwert-Erfassungseinrichtung (4, 5) zum Erfassen von Ausgangssignalwerten der Batterie-Energiequelle (1),
einer Ausgangssignalwert-Einstelleinrichtung (6) zum Einstellen eines gewünschten Ausgangssignalwertes der Batterie-Energiequelle, und
einer Steuereinrichtung (7) zum Steuern der Energie-Umwandlungseinrichtung (2) derart, daß ein Ausgangssignalwert der Batterie-Energiequelle (1) dem gewünschten Ausgangssignalwert entspricht,
wobei die Ausgangssignalwert-Einstelleinrichtung (6) den gewünschten Ausgangssignalwert auf der Grundlage einer Funktion einstellt, die anhand einer Vielzahl von Abtastwerten der durch die Ausgangssignalwert-Erfassungseinrichtung (4, 5) erfaßten Ausgangssignalwerte angenähert wird, und
wobei die Funktion entweder eine Potenzfunktion zweiten oder höheren Grades, eine trigonometrische Funktion oder eine Exponential-Funktion ist, und die Funktion von der Ausgangssignalwert-Einstelleinrichtung (6) verwendet wird, um den gewünschten Ausgangssignalwert zu erhalten, bei dem eine maximale Energie von der Batterie-Energiequelle (1) geliefert wird.

2. Vorrichtung nach Anspruch 1, wobei die Ausgangssignalwert-Erfassungseinrichtung eine Ausgangsspannungs-Erfassungseinrichtung und eine Ausgangsstrom-Erfassungseinrichtung aufweist.

3. Vorrichtung nach Anspruch 2, wobei die Ausgangssignalwert-Einstelleinrichtung m Energiewerte aus m Spannungswerten von der Ausgangsspannungs-Erfassungseinrichtung sowie m Stromwerte von der Ausgangsstrom-Erfassungseinrichtung erhält, die Funktion zum Annähern eines Energiewertes und eines Spannungswertes aus den m Spannungswerten und den m Energiewerten berechnet, und anhand der Funktion einen Ausgangsspannungswert einstellt, bei dem die Energie maximal wird.

4. Vorrichtung nach Anspruch 3, wobei die Funktion zum Annähern eine quadratische Funktion ist.

5. Vorrichtung nach Anspruch 4, wobei eine Abtastanzahl m der Spannung und des Stromes 3 gleich m=3 ist.

6. Leistungssteuerverfahren, mit den Schritten:
Fluktuieren der Ausgangsspannung einer Batterie-Energiequelle (1) und Erhalten von m Energiewerten, die die durch die Batterie-Energiequelle (1) gelieferte Energie anzeigen, auf der Grundlage von m entsprechenden Abtast-Spannungswerten und m entsprechenden Abtast-Stromwerten, die jeweils von einer Spannungs-Erfassungseinrichtung (4) und einer Stromerfassungseinrichtung (5) erhalten werden, wobei die Abtastung bei gewünschten Intervallen durchgeführt wird,
Erhalten einer Funktion, die die m Spannungswerte und die m entsprechenden Energiewerte annähert in Zusammenhang bringt, wobei die Funktion entweder eine Potenzfunktion zweiten oder höheren Grades, eine trigonometrische Funktion oder eine Exponential-Funktion darstellt,
Verwenden der Funktion zum Erhalten der gewünschten Ausgangsspannung der Batterie-Energiequelle (1), bei der diese eine maximale Energie liefert,
Steuern der Ausgangsleistung der Batterie-Energiequelle (1) derart, daß ihre Ausgangsspannung der gewünschten Ausgangsspannung entspricht.

7. Verfahren nach Anspruch 6, wobei die Funktion zum Annähern eine quadratische Funktion darstellt.

8. Verfahren nach Anspruch 6, wobei eine Abtastanzahl m der Spannung und des Stromes gleich m=3 ist.

9. Verfahren nach Anspruch 6, wobei das Abtastintervall ein vorbestimmtes Intervall darstellt.

10. Energie-Erzeugungssystem mit einer Leistungssteuervorrichtung nach Anspruch 1, wobei die Batterie-Energiequelle (1) eine Solarbatterie ist.

11. Energie-Erzeugungssystem mit einer Leistungssteuervorrichtung nach Anspruch 1, wobei die Batterie-Energiequelle (1) ein nicht-monokristallinen Halbleiter ist.

12. Energie-Erzeugungssystem mit einer Leistungssteuervorrichtung nach Anspruch 1, wobei eine Last (3) ein handelsübliches Wechselspannungssystem darstellt.

## Revendications

1. Dispositif de commande de puissance comportant :
des moyens de conversion de puissance (2) pour convertir une puissance électrique provenant d'une source de puissance de batterie (1) et délivrer la puissance convertie dans une charge (3),
des moyens de détection de valeurs de sortie (4,5) pour détecter des valeurs de sortie de ladite source de puissance de batterie (1),
des moyens de réglage de valeur de sortie (6) pour régler une valeur de sortie voulue de ladite source de puissance de batterie, et
des moyens de commande (7) pour commander lesdits moyens de conversion de puissance (2) de sorte qu'une valeur de sortie de la source de puissance de batterie (1) soit égale à ladite valeur de sortie voulue,
dans lequel lesdits moyens de réglage de valeur de sortie (6) règlent ladite valeur de sortie voulue sur la base d'une fonction approchée par approximation à partir d'une pluralité d'échantillons desdites valeurs de sortie détectées par lesdits moyens de détection de valeurs de sortie (4,5), et
dans lequel ladite fonction est une fonction de puissance de deuxième degré ou de degré supérieur, une fonction trigonométrique, ou une fonction exponentielle, et ladite fonction est utilisée par les moyens de réglage de valeur de sortie (6) pour obtenir ladite valeur de sortie voulue au niveau de laquelle une puissance maximale est délivrée par la source de puissance de batterie (1).

2. Dispositif selon la revendication 1, dans lequel lesdits moyens de détection de valeurs de sortie comportent des moyens de détection de tension de sortie et des moyens de détection de courant de sortie.

3. Dispositif selon la revendication 2, dans lequel lesdits moyens de réglage de valeur de sortie obtiennent m valeurs de puissance à partir de m valeurs de tension provenant desdits moyens de détection de tension de sortie et m valeurs de courant provenant desdits moyens de détection de courant de sortie, calculent ladite fonction pour approcher par approximation une valeur de puissance et une valeur de tension à partir desdites m valeurs de tension et desdites m valeurs de puissance, et établissent une valeur de tension de sortie au niveau de laquelle la puissance devient maximale à partir de ladite fonction.

4. Dispositif selon la revendication 3, dans lequel ladite fonction d'approche par approximation est une fonction quadratique.

5. Dispositif selon la revendication 4, dans lequel le nombre d'échantillonnage m de ladite tension et dudit courant est égal à m=3.

6. Procédé de commande de puissance comportant les étapes consistant à :
faire varier la tension de sortie d'une source de puissance de batterie (1) et obtenir m valeurs de puissance, représentatives de la puissance délivrée par la source de puissance de batterie (1), sur la base de m valeurs de tension d'échantillons correspondantes et de m valeurs de courant d'échantillons correspondantes obtenues respectivement à partir de moyens de détection de tension (4) et de moyens de détection de courant (5), l'échantillonnage étant effectué à des intervalles voulus,
obtenir une fonction qui concerne approximativement les m valeurs de tension et les m valeurs de puissance correspondantes, ladite fonction étant une fonction de puissance de deuxième degré ou de degré supérieur, une fonction trigonométrique ou une fonction exponentielle,
utiliser ladite fonction pour obtenir la tension de sortie voulue de ladite source de puissance de batterie (1) au niveau de laquelle elle délivre un puissance maximale,
commander la sortie de ladite source de puissance de batterie (1) de sorte que sa tension de sortie soit égale à la tension de sortie voulue.

7. Procédé selon la revendication 6, dans lequel ladite fonction d'approche par approximation est une fonction quadratique.

8. Procédé selon la revendication 6, dans lequel le nombre d'échantillonnage m de ladite tension et dudit courant est égal à m=3.

9. Procédé selon la revendication 6, dans lequel ledit intervalle d'échantillonnage est un intervalle prédéterminé.

10. Système de production puissance comportant un dispositif de commande de puissance selon la revendication 1, dans lequel la source de puissance de batterie (1) est une batterie solaire.

11. Système de production de puissance comportant un dispositif de commande de puissance selon la revendication 1, dans lequel la source de puissance de batterie (1) est un semi-conducteur non-monocristallin.

12. Système de production de puissance comportant un dispositif de commande de puissance selon la revendication 1, dans lequel la charge (3) est un système à courant alternatif (AC) disponible commercialement.
